# EUROPEAN PATENT APPLICATION

(11) **EP 2 290 967 A1**
(43) Date of publication of application: **02.03.2011**
(21) Application number: 08874164.0
(22) Date of filing: 03.12.2008
(51) Int. Cl.: H04N 7/14

(54) **METHOD, SYSTEM, DEVICE AND TERMINAL FOR TRANSMITTING SERVICE GUIDE OF MOBILE MULTIMEDIA BROADCAST**

(30) Priority: 05.05.2008 CN 200810105919
(71) Applicant: ZTE Corporation, Shenzhen, Guangdong 518057 (CN)
(72) Inventor: WANG, Ye, Shenzhen Guangdong 518057 (CN)
(74) Representative: Jansen, Cornelis Marinus
(86) International application number: PCT/CN2008/073324
(87) International publication number: WO 2009/135370

(57) **Abstract**

The present invention discloses a method, a system, a device and a terminal for downwardly transferring a service guide of a mobile multimedia broadcast. The method for downwardly transferring a service guide of a mobile multimedia broadcast comprises the following steps: step A, a content operation management platform generating a basic service information part of a service guide and downwardly transferring the basic service information part of the service guide to a terminal through a broadcast network; step B, a mobile service management platform generating a serving service information part of the service guide and downwardly transferring the serving service information part of the service guide to the terminal through a mobile network; and step C, the terminal combining the basic service information part and the serving service information part of the service guide to provide the service guide to the user. By this invention, unnecessary interacting flow for acquiring the basic service information is reduced, so that a congestion which probably appears on the mobile service platform is reduced and a waste of the mobile network bandwidth is commendably avoided, the bandwidth resource of the mobile network is spared, and a reliable operation of the service can be ensured.

## Description

### Field of the Invention

The present invention relates to the technical field of wireless communication, and in particular to a method, a system, a device and a terminal for downwardly transferring a service guide of a mobile multimedia broadcast.

### Background of the Invention

Along with the rapid development of the network technology, the function of the mobile communication network is improved increasingly, and 3G (Third Generation, the third generation mobile communication technology) network, with its relative high transmission speed, adds abundant functions to the communication terminals such as mobile phones, wherein the multimedia audio-video services are highly valued by the global operators.

Digital television and mobile communication are research hotspots of the IT industry at present, the two tend to have analogies and fusions in the technical and application aspects, wherein the service of mobile multimedia broadcast is quite prominent. Generally, the service of mobile multimedia broadcast is also called mobile-phone TV and refers to using the digital television technology to supply the terminals with broadcasting TV programs and information services at anytime and anywhere through a satellite or a terrestrial broadcast network. The mobile multimedia broadcast is not limited to be received by mobile phones, thus, the receiving terminals actually include also the mobile apparatuses such as vehicle-carried receivers, portable computers, personal digital assistants (PDA for short) and so on. In addition, the content transmitted and received in the broadcast network is not always only a TV program, it may also be multimedia content such as audio, graphics and text, internet protocol (IP for short) data and so on. Thus, compared with the title "mobile-phone TV", the above mentioned technology is designated more definitely and accurately as "mobile multimedia broadcast".

One of the preferable solutions of implementing the service of mobile multimedia broadcast is to combine the operating modes of a mobile network and a terrestrial broadcast network, and such an implementing solution not only solves the problem that the bandwidth of wireless channels of the mobile network is limited, but also solves the problem that the unidirectional transmission of the terrestrial broadcast channels is disadvantageous to the information interaction for achieving the operating purpose.

In a mobile multimedia broadcast system, it is usually necessary to provide the user with a service guide of the mobile multimedia broadcast, and this service guide is a guide system of the service of mobile multimedia broadcast, mainly for describing the relative information of all the services carried by the present network and the other networks, the service guide directly interacts with the user and runs at the terminal of the user. Generally, basic service guide information is provided by a broadcast operator. In an operating mode in which a mobile network and a terrestrial broadcast network are combined, the current mode for downwardly transferring a service guide of a mobile multimedia broadcast mainly includes: a content operation management platform of a broadcast operator transmitting the basic service guide information to a mobile service management platform, then the mobile service management platform re-combining and re-packing the service guide information, to generate a service guide containing basic service information and serving service information (mainly refers to PurchaseItem, interactions etc.), and finally performing bidirectional interaction with the user terminal through the mobile network to downwardly transfer the service guide.

There exist the following defects in the above mentioned current method for downwardly transferring a service guide of a mobile multimedia broadcast: it costs too much bandwidth of the mobile network. The basic service information in the service guide usually needs to be modified and updated, while the frequent modification of the basic service information will cause frequent update of the service guide, thus, when a user requests for a service guide, the update of the version of the service guide will leads to a transmission of plenty of data in the mobile network, therefore plenty of the mobile network bandwidth resources are consumed, and it is possible to cause the appearance of a congestion on the mobile service management platform.

To sum up, as to the practical use of the current technology for downwardly transferring a service guide of a mobile multimedia broadcast, there evidently exist inconveniences and defects, thus, it has to be improved.

### Summary of the Invention

The present invention is provided upon considering the problems that the update of the version of the service guide will leads to transmission of plenty of data in the mobile network, thereby consuming a plenty of the mobile network bandwidth resources and causing the appearance of a congestion on the mobile service management platform, thus the object of the present invention is to provide an improved solution for downwardly transferring a service guide of a mobile multimedia broadcast to solve at least one of the above mentioned problems.

In order to achieve the above mentioned object, according to one aspect of the present invention, it is suggested a method for downwardly transferring a service guide of a mobile multimedia broadcast, used for a system for downwardly transferring a service guide of a mobile multimedia broadcast which includes a content operation management platform, a broadcast network, a mobile service management platform, a mobile network and a terminal, the method including the following steps:
A, the content operation management platform generating a basic service information part of a service guide and transmitting the basic service information part of the service guide through the broadcast network;
B, the mobile service management platform generating a serving service information part of the service guide and transmitting the serving service information part to the terminal through the mobile network;
C, the terminal combining the basic service information part and the serving service information part of the service guide to provide the user with the service guide.

According to the above method, in step B, the mobile service management platform transmitting the serving service information part to the terminal after it performs a bidirectional interaction with the terminal through the mobile network.

According to the above method, in step A, generating a basic service information part of a service guide includes: generating an issued basic service information part of the service guide or generating an updated basic service information part of the service guide; and/or

in step B, generating a serving service information part of the service guide includes: generating an issued serving service information part of the service guide or generating an updated serving service information part of the service guide.

According to the above method, step B further includes:
B1, the mobile service management platform generating the serving service information part of the service guide;
B2, the terminal transmitting a message of requesting the serving service information part of the service guide to the mobile service management platform through the mobile network;
B3, the mobile service management platform returning, based on the message of requesting the serving service information part of the service guide, the serving service information part of the service guide to the terminal.

According to the above method, if, in step B2, the terminal selects a new serving, and transmits the message of requesting the serving service information part of the service guide to the mobile service management platform through the mobile network, then, in the step B3, the mobile service management platform judging, based on the message of requesting the serving service information part of the service guide, whether or not an updated serving service information part of the service guide has been generated, and returning the updated serving service information part of the service guide to the terminal if it is judged that an updated serving service information part of the service guide has been generated, otherwise, returning a non update response directly to the terminal.

According to the above method, step A further includes: the content operation management platform transmitting the basic service information part of the service guide to the mobile service management platform;
in step B, the mobile service management platform generates the serving service information part of the service guide based on the basic service information part of the service guide.

According to the above method, if, in step A, the content operation management platform generates an updated basic service information part of the service guide and transmits the updated basic service information part of the service guide to the mobile service management platform, in step B, the mobile service management platform, based on the updated basic service information part of the service guide, selects to generate an updated serving service information part of the service guide or selects not to generate an updated serving service information part of the service guide.

According to the above method, the basic service information part of the service guide includes: channel information, content information, arrangement information and/or access information; and/or
the serving service information part of the service guide includes: PurchaseItem information and/or interaction information.

In order to achieve the above mentioned object, according to a further aspect of the present invention, a system for downwardly transferring a service guide of a mobile multimedia broadcast is provided, the system includes a content operation management platform, a broadcast network, a mobile service management platform, a mobile network and a plurality of terminals, wherein
the content operation management platform is configured to generate a basic service information part of a service guide and transmit the basic service information part of the service guide to the terminal through the broadcast network;
the mobile service management platform is configured to generate a serving service information part of the service guide and downwardly transfer the serving service information part to the terminal through the mobile network;
the terminal is configured to combine the basic service information part and the serving service information part of the service guide to provide the user with the service guide.

According to the system above, the mobile service management platform transmits the serving service information part to the terminal after it performs a bidirectional interaction with the terminal through the mobile network.

In order to achieve the above mentioned object, according to a further aspect of the present invention, a method for downwardly transferring a service guide of a mobile multimedia broadcast is provided, the method includes the following steps:
A, a first transmitting party generating a serving service information part of a service guide and transmitting the basic service information part of the service guide to a receiving party through a first network;
B, a second transmitting party generating a serving service information part of the service guide and downwardly transferring the serving service information part to the receiving party through a second network;
C, the receiving party combining the basic service information part and the serving service information part of the service guide.

According to the above method, in step A, generating a basic service information part of a service guide includes: generating an issued basic service information part of a service guide or generating an updated basic service information part of a service guide; and/or
in step B, generating a serving service information part of the service guide includes: generating an issued serving service information part of the service guide or generating an updated serving service information part of the service guide.

According to the above method, step A further includes: the first transmitting party transmitting the basic service information part of the service guide to the second transmitting party;
in step B, the second transmitting party generates a serving service information part of the service guide based on the basic service information part of the service guide.

According to the above method, the first transmitting party is a content operating management platform, and the second transmitting party is a mobile service management platform.

According to the above method, the first network is a broadcast network, and the second network is at least one of 3GPP network and 3GPP2 network.

In order to achieve the above mentioned object, according to a further aspect of the present invention, it is provided a system for downwardly transferring a service guide, applied in a communication frame including a terminal and a content operating management platform, wherein the content operation management platform is configured to generate a basic service information part of a service guide and transmit the basic service information part of the service guide to the terminal through a first network, the system for downwardly transferring a service guide includes:
a first receiving module configured to receive the basic service information part of the service guide transmitted by the content operation management platform and generate a serving service information part of the service guide;
a first transmitting module configured to transmit the serving service information part of the service guide to the terminal, for the terminal to combine the basic service information part and the serving service information part of the service guide.

According to the above mentioned system for downwardly transferring a service guide, the first network is a broadcast network, the first transmitting module transmits the serving service information part of the service guide to the terminal through a second network, and the second network is a non-broadcast network.

In order to achieve the above mentioned object, according to a further aspect of the present invention, it is provided a system for downwardly transferring a service guide, applied in a communication frame including a terminal and a mobile service management platform, wherein the mobile service management platform configured to generate a serving service information part of a service guide and transmit the serving service information part of the service guide to the terminal through a second network, the system for downwardly transferring a service guide includes:
a first generating module, configured to generate a basic service information of the service guide;
a second transmitting module, configured to transmit the generated basic service information of the service guide to the terminal and the mobile service management platform, for the mobile service management platform to generate the serving service information part of the service guide based on the basic service information part of the service guide and for the terminal to combine the serving service information part and the basic service information part of the service guide.

In order to achieve the above mentioned object, according to a further aspect of the present invention, it is provided a terminal applied in a communication frame including a content operation management platform and a mobile service management platform, wherein the content operation management platform configured to generate a basic service information part of a service guide and transmit the basic service information part of the service guide to the terminal through a first network; the mobile service management platform configured to generate a serving service information of the service guide and transmit the serving service information part of the service guide to the terminal through a second network, characterized in that, the terminal includes:
a second receiving module configured to receive the basic service information part of the service guide transmitted by the content operation management platform and the serving service information part of the service guide transmitted by the mobile service management platform;
a service guide combining module configured to combine the basic service information part and the serving service information part of the service guide to provide the user with the service guide.

By means of at least one of the above mentioned technical solutions, the present invention divides the service guide into a basic service information part and a serving service information part, a content operation management platform generates the basic service information part of the service guide which contains a relative big data quantity, and transmits the basic service information part of the service guide which contains a relative big data quantity to a terminal through a broadcast network, while a mobile service management platform only generates the serving service information part of the service guide which contains a relative small data quantity and is related to the operation, and downwardly transfers the serving service information part to the terminal through a mobile network, and then the terminal combines the basic service information part and the serving service information part of the service guide to provide the service guide to the user. Compared with the prior art, unnecessary interacting procedure of acquiring the basic service information is reduced, and a waste of the mobile network bandwidth is avoided, therefore, the congestion which probably appears on the mobile service platform is avoided.

### Brief Description of the Drawings

Figure 1 is a schematic diagram of the structure of a system for downwardly transferring a service guide of a mobile multimedia broadcast provided by a first embodiment of the present invention;
Figure 2 is a schematic diagram of the structure of a system for downwardly transferring a service guide of a mobile multimedia broadcast provided by a second embodiment of the present invention;
Figure 3 is a schematic diagram of the structure of a system for downwardly transferring a service guide of a mobile multimedia broadcast provided by a third embodiment of the present invention;
Figure 4 is a schematic diagram of the structure of a terminal module provided by a fifth embodiment of the present invention;
Figure 5 is a flow chart of a method for downwardly transferring a service guide of a mobile multimedia broadcast provided by the embodiments of the present invention;
Figure 6 is a flow chart of a method for downwardly transferring a service guide of a mobile multimedia broadcast in the first embodiment of the present invention;
Figure 7 is a flow chart of a method for downwardly transferring a service guide of a mobile multimedia broadcast in the second embodiment of the present invention.

### Detailed Description of Embodiments

### Summary of the Function

In the technical solutions provided by the embodiments of the present invention, a service guide is divided into a basic service information part and a serving service information part, a content operation management platform generates the basic service information part of the service guide which contains a relative big data quantity, and transmits the basic service information part of the service guide which contains a relative big data quantity to a terminal through a broadcast network, while a mobile service management platform only generates the serving service information part of the service guide which contains a relative small data quantity and is related to the operation, and downwardly transfers the serving service information part to the terminal through a mobile network, and then the terminal combines the basic service information part and the serving service information part of the service guide to provide the service guide to the user.

In order to make the object, the technical solutions and the advantages of the present invention more definite and explicit, the present invention will be described hereinafter in detail in conjunction with the drawings and the embodiments. It should be indicated that the embodiments in the present application as well as the features therein can be combined with each other if there is not any conflict. And it should be understood that the specific embodiments described here are only to illustrate the preferred embodiments but not to limit the present invention.

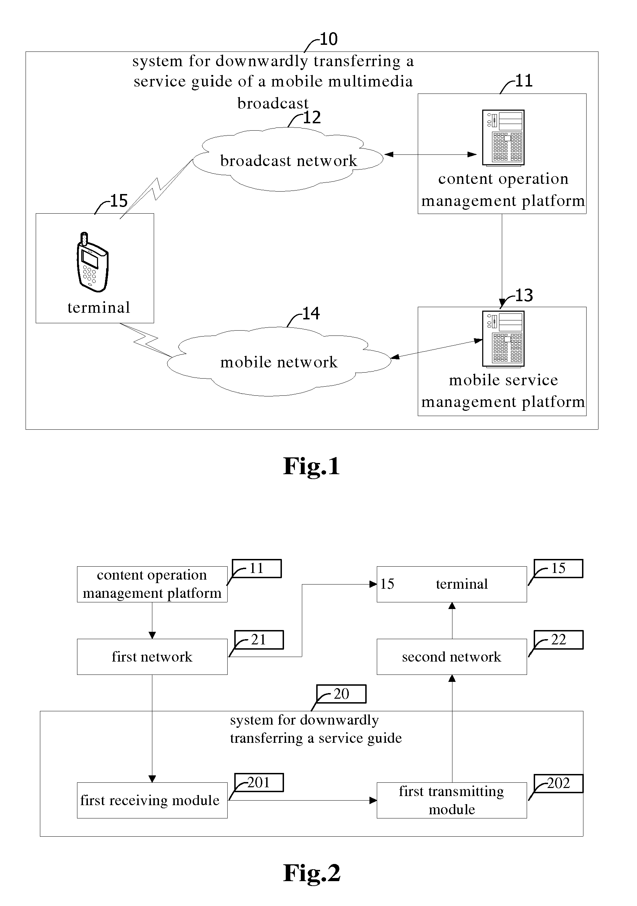

According to the first embodiment of the present invention, a system 10 for downwardly transferring a service guide of a mobile multimedia broadcast is provided, Figure 1 is a schematic diagram of the system 10 for downwardly transferring a service guide of a mobile multimedia broadcast. As shown in Figure 1, the system 10 includes a content operation management platform 11, a broadcast network 12, a mobile service management platform 13, a mobile network 14 and a plurality of terminals 15 (only one is shown in the figure), wherein:

The content operation management platform 11, which is connected with the broadcast network 12 and the mobile service management platform 13, is configured to generate a basic service information part of a service guide and transmit the basic service information part of the service guide to the terminal 15 through the broadcast network 12. The content operation management platform 11 can also be called broadcast side service management platform and can specifically include: a first generating module 301 and a second transmitting module 302, wherein:

The first generating module 301, configured to generate the basic service information of the service guide;

The second transmitting module 302, configured to transmit the basic service information of the service guide generated by the first generating module 301 to the terminal 15 and to the mobile service management platform 13, for generating a serving service information part of the service guide by the mobile service management platform 13 and for combining the serving service information part and the basic service information part of the service guide by the terminal 15.

Here the operation of generating the basic (service) information part of the service guide includes: generating an issued basic service information part of a service guide or generating an updated basic service information part of a service guide. Thus, by the content operation management platform 11, the basic service information part of the service guide can be issued to the terminal 15, and the basic service information part of the service guide of the terminal 15 can also be updated.

In the embodiments of the present invention, a service guide of a mobile multimedia broadcast is divided into a basic service information part and a serving service information part, wherein the basic service information part mainly includes: channel information, content information, arrangement information and access information etc.; the serving service information part mainly includes: operable information of the service such as PurchaseItem information and interaction information. The basic service information part of the service guide has a larger data amount and a higher changing frequency than the serving service information part. In the present invention, the basic service information part of the service guide which has a large data amount and a high changing frequency is transmitted by the content operation management platform 11 directly to the terminal 15 through the broadcast network 12, so that unnecessary interacting flow for acquiring the basic service information is reduced, therefore, a congestion which probably appears on the mobile service platform 13 is avoided and a waste of the mobile network bandwidth is commendably avoided, and the bandwidth resource of the mobile network 14 is spared.

The mobile service management platform 13, which is connected with the content operation management platform 11 and a mobile network 14, configured to generate the serving service information part of the service guide and downwardly transfer the serving service information part to the terminal 15 through the mobile network 14. The mobile service management platform 13 specifically includes: an interaction module 130 and a transmitting module 132, wherein the interaction module 130 is configured to perform bidirectional interaction with the terminal 15 through the mobile network 14; when the terminal 15 transmits a message of requesting the serving service information part of the service guide through the mobile network 14 to the mobile service management platform, the transmitting module 132 returns the serving service information part of the service guide to the terminal 15 based on the message of requesting the serving service information part of the service guide.

Thus, since a relative small data amount is downwardly transferred through the mobile network and only the serving service information related to the operation is included, not only a reliable operation of the service is ensured, but also the unnecessary interacting flow for acquiring the basic service information in the prior art is reduced, so that a congestion which probably appears on the mobile service platform 13 is avoided and a waste of the mobile network bandwidth is commendably avoided, and the bandwidth resource of the mobile network 14 is spared.

In the specific implementing procedure, the mobile service management platform 13 specifically can include: a first receiving module 201 and a first transmitting module 202, wherein the first receiving module 201 is configured to receive the basic service information part of the service guide transmitted by the content operation management platform 11 and generate the serving service information part of the service guide. The first transmitting module 202 is configured to transmit the serving service information part of the service guide generated by the first receiving module 201 to the terminal 15, so that the serving service information part and the basic service information part of the service guide are combined by the terminal 15.

The above mentioned operation of generating the serving service information part of the service guide includes: generating an issued serving service information part of the service guide or generating an updated serving service information part of the service guide. Therefore, by the mobile service management platform 13, the serving service information part of the service guide can be issued to the terminal 15, and the serving service information part of the service guide of the terminal 15 can also be updated.

In the embodiments of the present invention, after generating the basic service information part of the service guide, the content operation management platform 11 transmits the basic service information part of the service guide to the terminal 15 as well as to the mobile service management platform 13. The mobile service management platform 13 generates the serving service information part of the service guide based on the received basic service information part of the service guide. If the basic (service) information part is an updated basic service information part, the mobile service management platform 13, based on the updated basic service information part of the service guide, selects to generate an updated serving service information part of the service guide or selects not to generate an updated serving service information part of the service guide, and then selects a new serving at the terminal 15, and when the terminal 15 transmits a message of requesting the serving service information part of the service guide, the mobile service management platform judges, based on the message of requesting the serving service information part of the service guide, whether or not an updated serving service information part has been generated, if an updated serving service information part has been generated, it returns the updated serving service information part to the terminal 15, otherwise, it returns directly non update response to the terminal 15 to inform the terminal 15 of the non-change of the serving service information part of the service guide. Of course, the mobile service management platform 13 can also generate directly an updated serving service information part without the necessity of selecting to generate the updated serving service information part of the service guide only after the reception of the basic service information part of the service guide, which likewise falls within the scope of protection of the present invention.

The terminal 15, which is communicated with the content operation management platform 11 through the broadcast network 12 and performs bidirectional interaction with the mobile service management platform 13 through the mobile network 14, is mainly configured to receive the basic service information part of the service guide downwardly transferred by the content operation management platform 11 and the serving service information (part) downwardly transferred by the mobile service management platform 13 and combine the basic service information part and the serving service information part of the service guide to provide the user with a complete and effective service guide for the user to select a needed serving. More particularly, the terminal 15 receives the basic service information part of the service guide downwardly transferred by the content operation management platform 11 through the broadcast network 12, and transmits a message of requesting the serving service information part of the service guide to the mobile service management platform 13 through the mobile network 14, thereafter receives the serving service information part of the service guide returned by the mobile service management platform 13 through the mobile network 14, and finally combines the basic service information part and the serving service information part of the service guide to provide the user with a complete and effective service guide for the user to select a needed serving. The terminal 15 can include a second receiving module 151 and a service guide combining module 152, wherein:

The second receiving module 151 is configured to receive the basic service information part of the service guide transmitted by the content operation management platform 11 and the serving service information part of the service guide transmitted by the mobile service management platform 15;

The service guide combining module 152 is configured to combine the basic service information part of the service guide and the serving service information part of the service guide received by the second receiving module 151 so as to provide the user with the service guide.

Figure 2 is a schematic diagram of the structural modules of a system 20 for downwardly transferring a service guide of a mobile multimedia broadcast provided by the second embodiment of the present invention. The system 20 is preferably applied in a communication frame including the above mentioned terminal 15 and content operation management platform 11. As shown in Figure 2, the content operation management platform 11 is configured to generate a basic service information part of a service guide and transmit the basic service information part of the service guide to the terminal 15 through a first network 21, the above mentioned system 20 for downwardly transferring a service guide includes: a first receiving module 201 and a first transmitting module 202.

Preferably, the first network 21 is a broadcast network, and the first transmitting module 202 transmits a serving service information part of the service guide to the terminal 15 through a second network 22, wherein the second network 22 is a non-broadcast network, which can be but is not limited in the following networks: mobile networks such as 3GPP network, 3GPP2 network, GSM network, CDMA network and so on.

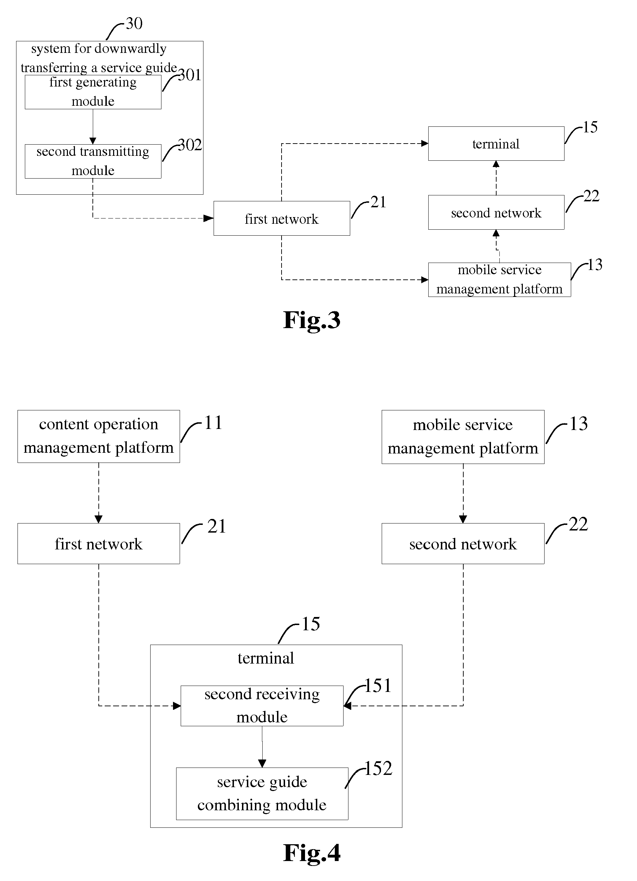

Figure 3 is a schematic diagram of the structural modules of a system 30 for downwardly transferring a service guide provided by the third embodiment of the present invention. The system 30 is preferably applied in a communication frame including the above mentioned terminal 15 and mobile service management platform 13. As shown in Figure 3, the mobile service management platform 13 is configured to generate a serving service information part of the service guide and transmit the serving service information part of the service guide to the terminal through a second network 22, the system 30 for downwardly transferring a service guide includes: a first generating module 301 and a second transmitting module 302.

The fourth embodiment of the present invention provides a device for downwardly transferring a service guide, which is preferably applied in a communication frame including the above mentioned terminal 15 and further includes systems 20 and 30 for downwardly transferring a service guide according to figures 2 and 3, i.e. it includes a first receiving module 201, a first transmitting module 202, a first generating module 301 and a second transmitting module 302.

Figure 4 is a schematic diagram of the structural modules of a terminal module 15 provided by a fifth embodiment of the present invention. The terminal 15 is preferably applied in a communication frame including the above mentioned content operation management platform 11 and mobile service management platform 13. As shown in Figure 4, the content operation management platform 11 is configured to generate a basic service information part of a service guide and transmit the basic service information part of the service guide to the terminal 15 through a first network 21; the mobile service management platform 13 is configured to generate a serving service information part of the service guide and transmit the serving service information part of the service guide to the terminal 15 through a second network 22, the terminal 15 includes: a second receiving module 151 and a service guide combining module 152.

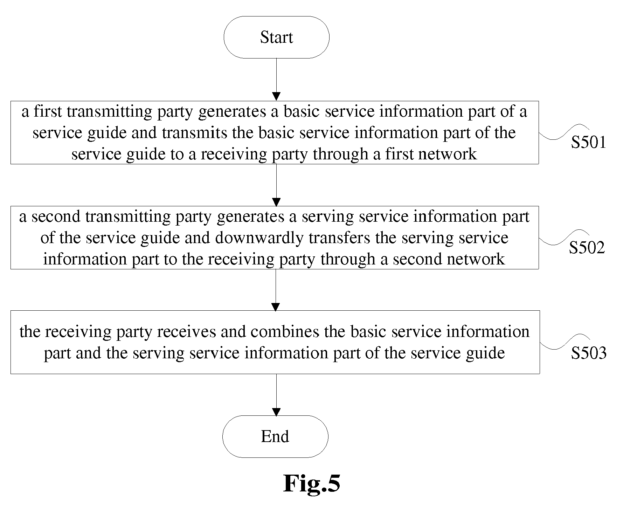

Figure 5 is a flow chart of a method for downwardly transferring a service guide of a mobile multimedia broadcast provided by the embodiments of the present invention. As shown in Figure 5, the method includes the following steps (step S501 - step S503):

Step S501, a first transmitting party generates a basic service information part of a service guide and transmits the basic service information part of the service guide to a receiving party through a first network.

In the embodiments of the present invention, the above mentioned first transmitting party can either be a content operation management platform 11 as shown in Figure 1, 2 or 4, or be a system 30 for downwardly transferring a service guide as shown in Figure 3; the first network can either be a first network 21 as shown in Figure 2 to Figure 5, or be a broadcast network 12 as shown in Figure 1; and the receiving party is preferably a terminal 15 as shown in Figure 1 to Figure 5.

The above mentioned operation of generating the basic service information part of the service guide includes: generating an issued basic service information part of a service guide or generating an updated basic service information part of a service guide.

Step S502, a second transmitting party generates a serving service information part of the service guide and downwardly transfers the serving service information part to the receiving party through a second network.

In the embodiments of the present invention, the second transmitting party can either be a system 20 for downwardly transferring a service guide as shown in Figure 2, or be a mobile service management platform 13 as shown in figure 1 and Figure 3 to Figure 5; the second network can either be a second network 22 as shown in Figure 2 to Figure 5, or be a mobile network 14 as shown in Figure 1. The second network 22 or the mobile network 14 is preferably at least one of e.g. 3GPP network and 3GPP2.

Taking the system 10 shown in Figure 1 as an example, the mobile service management platform 13 transmits the serving service information part to the terminal 15 after performing a bidirectional interaction with the terminal 15 through the mobile network 14. More particularly, the mobile service management platform 13 generates the serving service information part of the service guide; the terminal 15 transmits a message of requesting the serving service information part of the service guide to the mobile service management platform 13 through the mobile network 14; the mobile service management platform 13 returns the serving service information part of the service guide to the terminal 15 based on the message for the serving service information part of the service guide.

The above mentioned operation of generating the serving (service) information part of the service guide includes: generating an issued serving service information part of the service guide or generating an updated serving service information part of the service guide.

Step S503, the receiving party combines the basic service information part and the serving service information part of the service guide to provide the user with a complete and effective service guide.

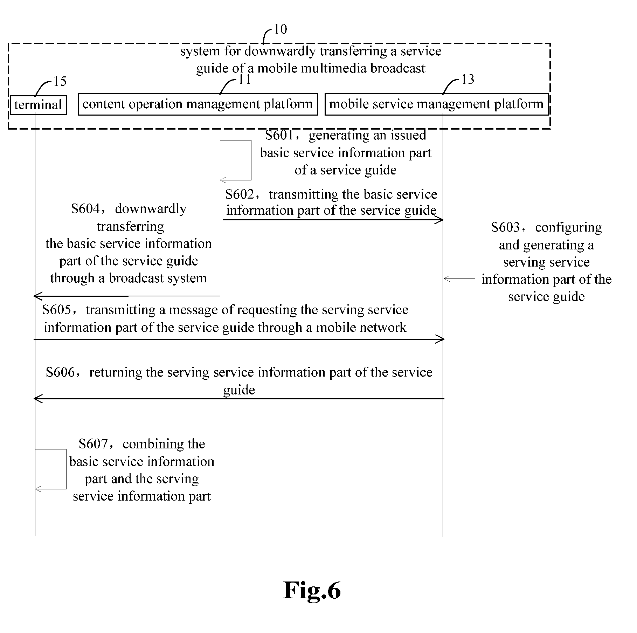

In order to illustrate the present invention better, Figure 6 is a flow chart of a method for downwardly transferring a service guide of a mobile multimedia broadcast provided by the first embodiment of the present invention, applied in a system 10 for downwardly transferring a service guide as shown in Figure 1. As shown in Figure 6, the method includes the following steps (step S601 - step S607):

Step S601, a content operation management platform 11 edits and issues service information, generates an issued basic service information part of a service guide by a first generating module 301.

In the embodiment of the present invention, the basic service information part of the service guide includes: channel information, content information, arrangement information and access information and so on.

Step S602, a second sending module 302 of the content operation management platform 11 transmits the issued basic service information part of the service guide to a mobile service management platform 13.

Step S603, a first receiving module 201 of the mobile service management platform 13 receives the basic service information part, configures and generates an issued serving service information part of the service guide based on the issued basic service information part of the service guide.

The above mentioned serving service information of the service guide is operable information of the service, including: PurchaseItem information and interaction information etc., so as to provide the terminal 15 with subsequent channels of service order.

Step S604, the second transmitting module 302 of the content operation management platform 11 transmits the issued basic service information part of the service guide to the terminal 15 through a broadcast network 12.

During the specific implementing procedure, the above mentioned step S604 and step S602 are performed in no particular sequential order.

Step S605, the terminal 15 transmits a message of requesting the serving service information part of the service guide to the mobile service management platform 13 through a mobile network 14.

Step S606, a first transmitting module 202 of the mobile service management platform 13 returns the serving service information part of the service guide to the terminal 15 based on the message of requesting the serving service information part of the service guide.

Step S607, a second receiving module 151 of the terminal 15 receives the basic service information part of the service guide downwardly transferred by the content operation management platform 11 and the serving service information part of the service guide downwardly transferred by the mobile service management platform 13, and a service guide combining module 152 combines the basic service information part and the serving service information part of the service guide so as to provide the user with a complete and effective service guide for the user to select a needed serving.

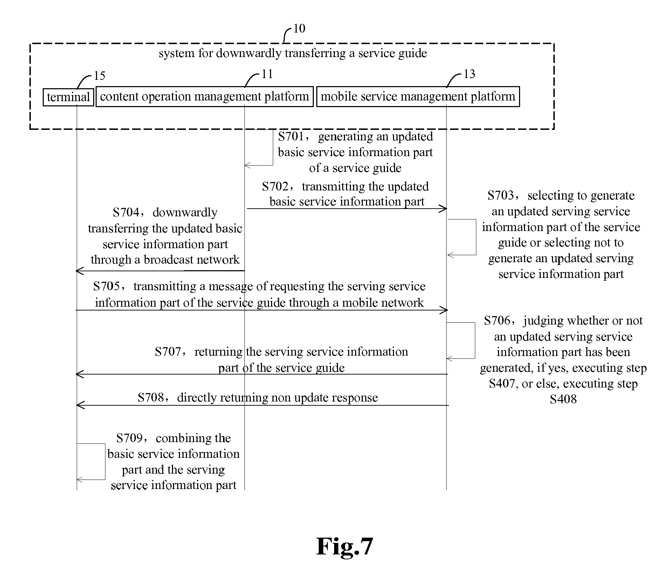

Figure 7 is a flow chart of a method for downwardly transferring a service guide of a mobile multimedia broadcast provided by the second embodiment of the present invention, applied in a system 10 for downwardly transferring a service guide as shown in figure 1. As shown in Figure 7, the method specifically includes the following steps (step S701 - step S709):

Step S701, a first generating module 301 of a content operation management platform 11 generates an updated basic service information part of a service guide.

Step S702, a second transmitting module 302 of the content operation management platform 11 transmits the updated basic service information part of the service guide to a mobile service management platform 13.

Step S703, a first receiving module 201 of the mobile service management platform 13, based on the updated basic service information part of the service guide, selects to generate an updated serving service information part of the service guide or selecting not to generate an updated serving service information part of the service guide.

Of course, the mobile service management platform 13 may also select to generate an updated serving service information part of the service guide or select not to generate an updated serving service information part of the service guide in the case of inexecution of step S701 and step S703, that is, it may generate an updated serving service information part of the service guide independent of the updated basic service information part of the service guide or select not to generate an updated serving service information part of the service guide, which likewise falls within the scope of protection of the present invention.

Step S704, a second transmitting module 302 of the content operation management platform 11 transmits the updated basic service information part of the service guide to a terminal 15 through a broadcast network 12.

In the embodiments of the present invention, step S709 should be executed if the user does not select a new serving. And step S708 is to be executed subsequently if the user selects a new serving.

Step S705, in the case where the user selects a new serving, the terminal 15 transmits a message of requesting the serving service information part of the service guide to the mobile service management platform 13 through a mobile network 14.

Step S706, a first transmitting module 202 of the mobile service management platform 13 judges, based on the message of requesting the serving service of the service guide, whether or not an updated serving service information part of the service guide has been generated, executes step S707 if it is judged that an updated serving service information part of the service guide has been generated, or else, executes step S708.

Step S707, the first transmitting module 202 of the mobile service management platform 13 returns the updated serving service information part of the service guide to the terminal 15 through the mobile network 14.

Step S708, the first transmitting module 202 of the mobile service management platform 13 directly returns non update response to the terminal 15 through the mobile network 14.

In the embodiments of the present invention, the above mentioned step S705 to step S708 are dispensable steps, which is the most popular situation in the system, now there is no interaction between the terminal 15 and the mobile service management platform 13, and there are no data transmitted in the mobile network 14. Step S707 will probably appear, but the amount of data interaction is quite small. Also step S708 may appear, as the service begins to operate, the frequency of changing the serving service is usually in unit of month, moreover, in such a case, the mobile network 14 also transmits the serving information only, which carries a smaller data amount than the basic information, thus, under the condition of ensuring the convenience of operation and management of the service, the present invention downwardly transfers the basic service information which takes majority of the data of the service guide as much as possible by means of the broadcast network 12 with abound resources, so that the serving service data acquired by the terminal 15 on the bidirectional interaction channels are as simplified and effective as possible, therefore, the occupy of the mobile network resources is reduced effectively and the problem of network data congestion which probably appears is avoided.

Step S709, a service guide combining module of the terminal 15 combines the basic service information part and the serving service information part of the service guide so as provide the user with a complete and effective updated service guide for the user to select a needed serving.

It should be indicated that the methods for downwardly transferring a service guide of a mobile multimedia broadcast provided by the above mentioned first embodiment and second embodiment are also adapted to the system 20, 30 or the device for downwardly transferring a service guide and the terminal 15 as shown in Figure 2 to Figure 5.

To sum up, in the embodiments of the present invention, a service guide is divided into a basic service information part and a serving service information part, wherein a content operation management platform generates the basic service information part of the service guide which contains a relative big data quantity, and transmits the basic service information part of the service guide which contains a relative big data quantity to a terminal through a broadcast network, while a mobile service management platform only generates the serving service information part of the service guide which contains a relative small data quantity and is related to the operation, and downwardly transfers the serving service information part to the terminal through a mobile network, and then the terminal combines the basic service information part and the serving service information part of the service guide to provide the service guide to the user. Compared with the prior art, unnecessary interacting procedure of acquiring the basic service information is reduced, therefore, a congestion which probably appears on the mobile service platform is avoided and a waste of the mobile network bandwidth is commendably avoided, the bandwidth resource of the mobile network is spared, and a reliable operation of the service can be ensured.

Obviously, the person skilled in the art should understand that the respective modules and respective steps of the above mentioned invention can be carried out by common computer devices, they may be integrated on an individual computer device or distributed on a network composed of a plurality of computer devices, alternatively, they can be carried out by computer-executable program codes, therefore, they can be stored in a memory device to be executed by the computer devices, or they can be manufactured respectively as respective integrated circuit modules, or a plurality of the modules or steps thereof are manufactured as an individual integrated circuit module to carry them out. Thus, the present invention is not limited in any specific combination of hardware and software.

Of course, the invention may have some other embodiments, and the person familiar to the art, without departing from the spirit and essence of the invention, can correspondingly change and modify the invention, which should correspondingly belong to the scope of protection of the appended claims of the invention.

## Claims

1. A method for downwardly transferring a service guide of a mobile multimedia broadcast, **characterized by**, being applied in a system for downwardly transferring a service guide of a mobile multimedia broadcast which includes a content operation management platform, a broadcast network, a mobile service management platform, a mobile network and a terminal, the method including:
step A, the content operation management platform generating a basic service information part of a service guide and transmitting the basic service information part of the service guide through the broadcast network;
step B, the mobile service management platform generating a serving service information part of the service guide and transmitting the serving service information part to the terminal through the mobile network;
step C, the terminal combining the basic service information part and the serving service information part of the service guide to provide the user with the service guide.

2. The method according to claim 1, **characterized in that**, in step B, the mobile service management platform transmitting the serving service information part to the terminal after it performs a bidirectional interaction with the terminal through the mobile network.

3. The method according to claim 2, **characterized in that**, in step A, generating a basic service information part of a service guide includes: generating an issued basic service information part of the service guide or generating an updated basic service information part of the service guide; and/or
in the step B, generating a serving service information part of the service guide includes: generating an issued serving service information part of the service guide or generating an updated serving service information part of the service guide.

4. The method according to claim 3, **characterized in that** step B further includes:
step B1, the mobile service management platform generating the serving service information part of the service guide;
step B2, the terminal transmitting a message of requesting the serving service information part of the service guide to the mobile service management platform through the mobile network;
step B3, the mobile service management platform returning, based on the message of requesting the serving service information part of the service guide, the serving service information part of the service guide to the terminal.

5. The method according to claim 4, **characterized in that**, if, in step B2, the terminal selects a new serving and transmits the message of requesting the serving service information part of the service guide to the mobile service management platform through the mobile network, then, in step B3, the mobile service management platform judging, based on the message of requesting the serving service information part of the service guide, whether or not an updated serving service information part of the service guide has been generated, and returning the updated serving service information part of the service guide to the terminal if it is judged that an updated serving service information part of the service guide has been generated, otherwise, returning a non update response directly to the terminal.

6. The method according to claim 3, **characterized in that** step A further includes:
the content operation management platform transmitting the basic service information part of the service guide to the mobile service management platform;
in step B, the mobile service management platform generates the serving service information part of the service guide based on the basic service information part of the service guide.

7. The method according to claim 6, **characterized in that**, if, in step A, the content operation management platform generates an updated basic service information part of the service guide and transmits the updated basic service information part of the service guide to the mobile service management platform, in step B, the mobile service management platform, based on the updated basic service information part of the service guide, selects to generate an updated serving service information part of the service guide or selects not to generate an updated serving service information part of the service guide.

8. The method according to claim 2, **characterized in that** the basic service information part of the service guide includes: channel information, content information, arrangement information and/or access information; and/or
the serving service information part of the service guide includes: PurchaseItem information and/or interaction information.

9. A system for downwardly transferring a service guide applying the method according to any one of claims 1 to 8, **characterized in that** the system includes a content operation management platform, a broadcast network, a mobile service management platform, a mobile network and at least one terminal, wherein
the content operation management platform is configured to generate a basic service information part of a service guide and transmit the basic service information part of the service guide to the terminal through the broadcast network;
the mobile service management platform is configured to generate a serving service information part of the service guide and transmit the serving service information part through the mobile network;
the terminal is configured to receive and combine the basic service information part and the serving service information part of the service guide to provide the user with the service guide.

10. The system according to claim 9, **characterized in that**, the mobile service management platform includes:
an interaction module, configured to perform a bidirectional interaction with the terminal through the mobile network;
a transmitting module, configured to transmit the serving service information part.

11. A method for downwardly transferring a service guide of a mobile multimedia broadcast, **characterized in that**, the method includes:
step A, a first transmitting party generating a serving service information part of a service guide and transmitting the basic service information part of the service guide to a receiving party through a first network;
step B, a second transmitting party generating a serving service information part of the service guide and transmitting the serving service information part to the receiving party through a second network;
step C, the receiving party combining the basic service information part and the serving service information part of the service guide.

12. The method according to claim 11, **characterized in that**, in step A, generating a basic service information part of a service guide includes: generating an issued basic service information part of a service guide or generating an updated basic service information part of a service guide; and/or
in step B, generating a serving service information part of the service guide includes: generating an issued serving service information part of the service guide or generating an updated serving service information part of the service guide.

13. The method according to claim 11, **characterized in that**, step A further includes:
the first transmitting party transmitting the basic service information part of the service guide to the second transmitting party;
in step B, the second transmitting party generates a serving service information part of the service guide based on the basic service information part of the service guide.

14. The method according to any one of claims 11 to 13, **characterized in that**, the first transmitting party includes a content operating management platform, and the second transmitting party includes a mobile service management platform.

15. The method according to claim 14, **characterized in that**, the first network is a broadcast network, and the second network is at least one of 3GPP network and 3GPP2 network.

16. A system for downwardly transferring a service guide, applied in a communication frame including a terminal and a content operating management platform, wherein the content operation management platform is configured to generate a basic service information part of a service guide and transmit the basic service information part of the service guide to the terminal through a first network, **characterized in that**, the system for downwardly transferring a service guide includes:
a first receiving module configured to receive the basic service information part of the service guide transmitted by the content operation management platform and generate a serving service information part of the service guide;
a first transmitting module configured to transmit the serving service information part of the service guide to the terminal, for the terminal to combine the basic service information part and the serving service information part of the service guide.

17. The system according to claim 16, **characterized in that**, the first network is a broadcast network, the first transmitting module transmits the serving service information part of the service guide to the terminal through a second network, and the second network is a non-broadcast network.

18. A system for downwardly transferring a service guide, applied in a communication frame including a terminal and a mobile service management platform, wherein the mobile service management platform is used for generating a serving service information part of a service guide and transmitting the serving service information part of the service guide to the terminal through a second network, **characterized in that**, the system for downwardly transferring a service guide includes:
a first generating module, configured to generate a basic service information of the service guide;
a second transmitting module, configured to transmit the generated basic service information of the service guide to the terminal and the mobile service management platform, for the mobile service management platform to generate the serving service information part of the service guide based on the basic service information part of the service guide and for the terminal to combine the serving service information part and the basic service information part of the service guide.

19. A device for downwardly transferring a service guide, including a system for downwardly transferring a service guide as in claim 16 and claim 18.

20. A terminal, applied in a communication frame including a content operation management platform and a mobile service management platform, wherein the content operation management platform configured to generate a basic service information part of a service guide and transmit the basic service information part of the service guide to the terminal through a first network; the mobile service management platform configured to generate a serving service information of the service guide and transmit the serving service information part of the service guide to the terminal through a second network, **characterized in that**, the terminal includes:
a second receiving module, configured to receive the basic service information part of the service guide transmitted by the content operation management platform and the serving service information part of the service guide transmitted by the mobile service management platform;
a service guide combining module, configured to combine the basic service information part and the serving service information part of the service guide to provide the user with the service guide.
